# EUROPÄISCHE PATENTSCHRIFT

(11) **EP 0 495 797 B1**
(45) Veröffentlichungstag und Bekanntmachung des Hinweises auf die Patenterteilung: **07.12.1994**
(21) Anmeldenummer: 90913697.0
(22) Anmeldetag: 13.09.1990
(51) Int. Cl.: B60T 8/00

(54) **RADSCHLUPFREGELSYSTEM**
WHEEL SLIP REGULATING SYSTEM
SYSTEME DE REGULATION DU PATINAGE

(30) Priorität: 09.10.1989 DE 3933653
(43) Veröffentlichungstag der Anmeldung: 29.07.1992
(73) Patentinhaber: ROBERT BOSCH GMBH, 70442 Stuttgart (DE)
(72) Erfinder: ISELLA, Thomas, D-7145 Markgröningen (DE)
(86) Internationale Anmeldenummer: EP9001556
(87) Internationale Veröffentlichungsnummer: WO9104891

(56) Entgegenhaltungen:
- DE-A- 3 611 822
- DE-A- 3 708 063
- DE-A- 3 736 010
- DE-A- 3 903 833
- FR-A- 2 591 957

## Beschreibung

### Stand der Technik

Es sind z.B. Antiblockierregelsysteme, Antriebsschlupfregelsysteme oder Motorschleppmomentregelsysteme bekannt, die den durch zu starkes Bremsen bzw. zuviel Antriebsmoment bzw. zu wenig Antriebsmoment bei dem gegebenen Untergrund erzeugten zu großen Radschlupf vermeiden. Hierbei wird gegebenenfalls zusätzlich zu anderen Regelkriterien der Radschlupf bestimmt und mit einem Grenzwert verglichen. Wird der Grenzwert überschritten, so wird Bremsdruck abgebaut bzw. Bremsdruck aufgebaut und gegebenenfalls das Motormoment reduziert bzw. das Motormoment erhöht.

In der DE 36 11 822 ist ein deratiges Antiblockier-Bremsregelsystem (ABS) beschrieben. Dieses bekannte System überwacht zusätzlich die auftretenden Querkräfte und verkleinert bei Überschreiten einer Schwelle für die auftretenden Querkräfte (also bei Kurvenfahrt) die Schlupfschwelle, mit denen das ABS die auftretenden Schlupfwerte vergleicht. Hierdurch wird bei arbeitendem ABS die Kurvenführungskraft erhöht.

Manche Kraftfahrzeuge haben die Eigenschaft bei Kurvenfahrt zu unter- oder zu übersteuern. Diese Eigenschaft wird durch einen größeren Radschlupf verstärkt, d.h., daß bei Kurvenfahrt und laufender Regelung die Eigenschaft verstärkt auftritt.

### Vorteile der Erfindung

Mit der erfindungsgemäßen Lösung wird künstlich ein Giermoment erzeugt, das abhängig vom Fahrzeugtyp ist und der speziellen Neigung (Über- oder Untersteuern) des Fahrzeugs entgegenwirkt. Hierdurch wird die Fahrstabilität erhöht.

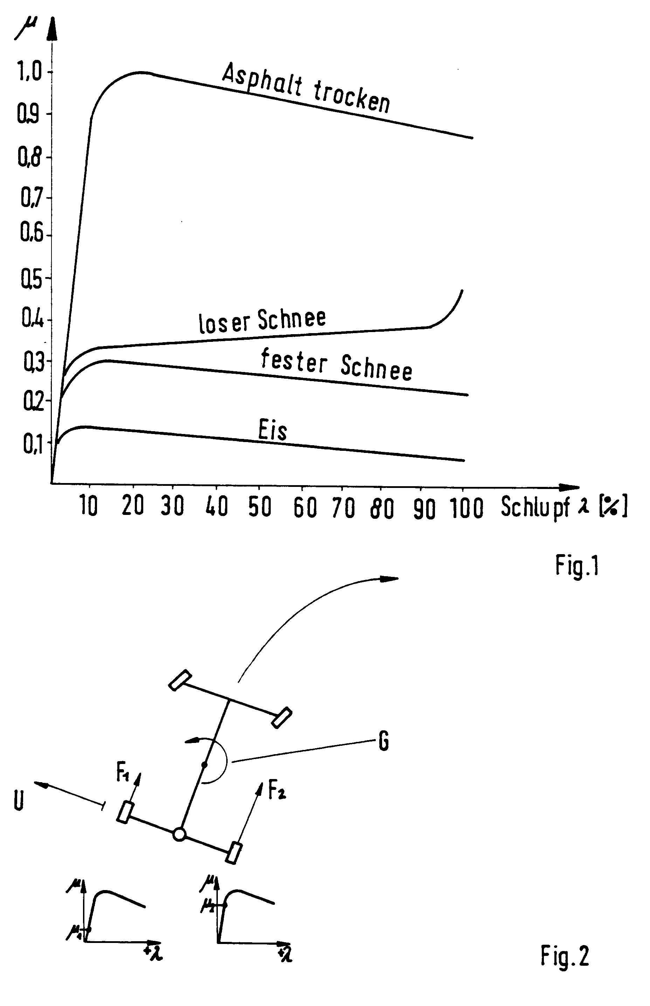

Die Erfindung beruht auf der Charakteristik der µ-Schlupfkurve, d.h. auf dem Verlauf der Reibkraft zwischen Reifen und Fahrbahn als Funktion des Radschlupfes (siehe Fig. 1).

Durch Radschlupfregelungssysteme wie z.B. ABS, ASR oder MSR läßt sich über die Einstellung der Grenzwerte für den Radschlupf (Schlupfschwellen) der Arbeitspunkt auf der µ-Schlupfkurve für jedes Rad individuell festlegen. Bei der ASR- und MSR-Funktion ist dazu ein System mit aktivem Bremseneingriff an den Antriebsrädern notwendig, d.h. es bedarf einer Druckeinsteuerung.

Die jeweilige Regelung versucht nun, jedes Rad auf den vorgegebenen Grenzwert einzuregeln. Da bei o.g. Schlupfregelsystemen zur Erhaltung der Fahrstabilität (Seitenführung) üblicherweise relativ geringe Schlupfwerte eingestellt werden, kann davon ausgegangen werden, daß sich der Arbeitspunkt im steil ansteigenden Bereich (nahezu linearen Anstieg) der µ-Schlupfkurve befindet. Damit ist die in diesem Bereich übertragene Antriebs- oder Bremskraft ungefähr proportional zum eingestellten Schlupf.

Es kann durch unterschiedlich eingestellten Schlupf auf der rechten und linken Fahrzeugseite und den daraus resultierenden unterschiedlichen Brems- bzw. Antriebskräften ein Giermoment erzeugt werden. Gezielt eingesetzt kann dieses Giermoment einer Über- oder Untersteuerneigung (Drehbewegung um die Hochachse des Fahrzeugs) bei Kurvenfahrt, entgegenwirken oder diese ganz beseitigen.

Dabei ist der Zugewinn an Fahrstabilität dann nicht mit Verlust an Beschleunigungs- bzw. Verzögerungsvermögen verbunden, wenn der Verringerung des Schlupfes auf der einen Fahrzeugseite eine Erhöhung auf der anderen Seite entgegensteht. Eine Erhöhung des Schlupfes bedeutet aber eine Erhöhung der übertragenen Kraft, solange sich der Arbeitspunkt im ansteigenden Bereich der µ-Schlupfkurve befindet. Die Seitenführungskraft bleibt in der Summe über beide Räder näherungsweise konstant.

Anhand der Zeichnung werden Ausführungsbeispiele der Erfindung erläutert:
Es zeigen:
- Fig. 1: µ-Schlupfkurven bei verschiedenem Untergrund,
- Fig. 2-4: schematische Fahrzeugdarstellungen zur Erläuterung der Wirkungsweise des erfindungsgemäßen Systems,
- Fig. 5: ein Blockschaltbild eines Reglers.

Beim Ausführungsbeispiel der Fig. 2 handelt es sich um ein Fahrzeug mit Heckantrieb, das mit ASR ausgerüstet ist und dessen ASR wirksam ist und in einer Kurve fährt.

Die Kurvenerkennung wird z.B. über die Geschwindigkeitsdifferenz der Vorderräder oder mit Hilfe eines Querbeschleunigungssensors oder eines Lenkwinkel-Sensors bewirkt. Das kurveninnere Rad wird nun mit Hilfe des Eingriffs in die Hinterradbremse auf einen höheren Schlupfgrenzwert eingeregelt als das kurvenäußere Rad. Durch die unterschiedlichen Antriebskräfte (F₁, F₂) entsteht ein Giermoment G, welches der üblichen Übersteuertendenz U dieses Fahrzeugs in dieser Fahrsituation entgegenwirkt. Die Seitenführungskraft wird am kurvenäußeren Rad erhöht und am kurveninneren Rad verringert, so daß sie in der Summe ungefähr konstant bleibt.

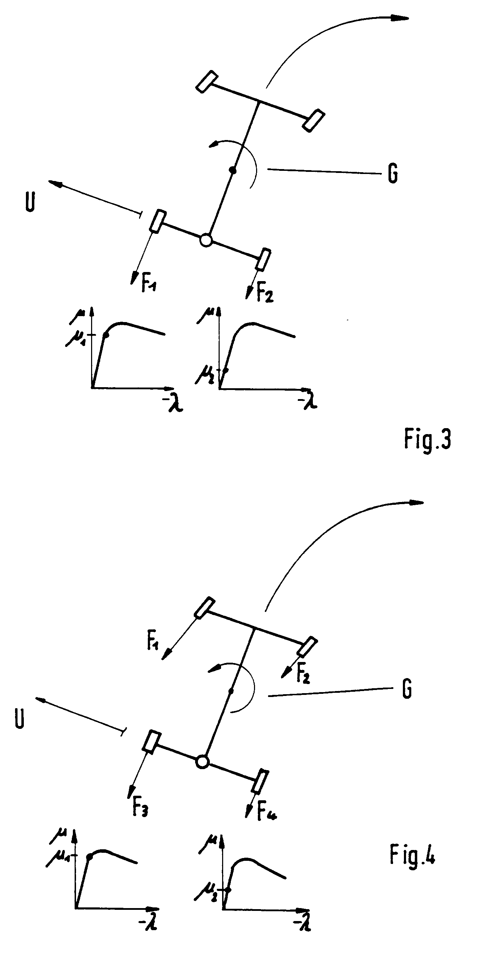

Beim Ausführungsbeispiel der Fig. 3 fährt das Fahrzeug in einer Kurve, hat einen regelnden Motorschleppmomentenregler und Heckantrieb.

Die Kurvenerkennung erfolgt wie oben beschrieben. Beide Antriebsräder befinden sich im Schleppschlupf (Bremsschlupf durch Motorschleppmoment).

Durch den Motoreingriff (aktives Gasgeben) und gleichzeitigen aktiven Bremseingriff am kurvenäußeren Hinterrad wird am kurvenäußeren Hinterrad ein Bremsschlupf beibehalten und am kurveninneren Hinterrad Schlupf = 0 (oder leichter Antriebsschlupf) eingestellt. Dadurch wirkt wegen der unterschiedlichen Kräfte F₁, F₂ ein Giermoment um die Hochachse, welches das übersteuernde Fahrzeug stabilisiert. Wie in Fig. 2 ist den angetriebenen Rädern je eine µ-Schlupfkurve zugeordnet und es sind darin die Betriebspunkte eingezeichnet.

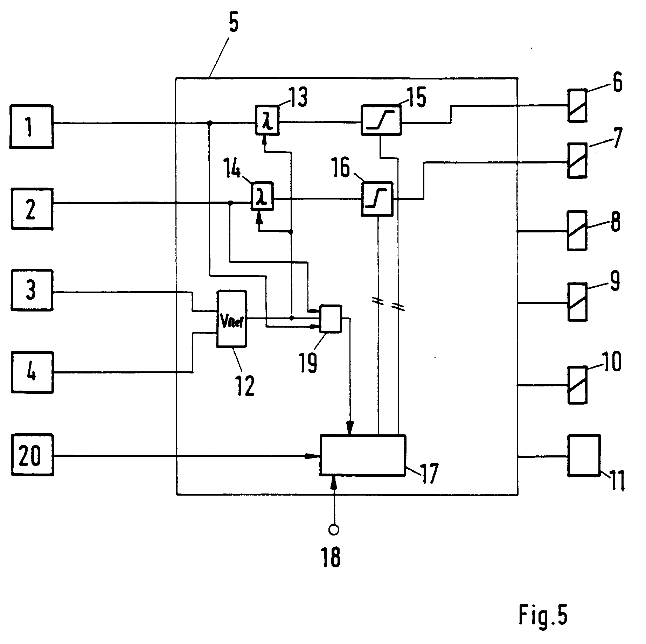

Beim Ausführungsbeispiel der Fig. 4 ist während einer Kurvenfahrt ein ABS-Eingriff während einer Bremsung angenommen.

Die Kurvenerkennung erfolgt auch hier wie oben beschrieben. Durch einen höheren Bremsschlupf des kurvenäußeren Vorder- und Hinterrades, oder vorzugsweise nur des Vorderrades, kann ein entsprechendes Giermoment erzeugt werden, welches ein übersteuerndes Fahrzeug stabilisiert.

Die Vorteile der Erfindung liegen in der
- Verringerung von Gierbewegungen des Fahrzeugs beim ABS-geregelten Bremsen in der Kurve bei unverändertem Bremsweg.
- Verringerung der Gierbewegung (Übersteuern) im ASR-Betrieb von heckgetriebenen Fahrzeugen in der Kurve bei unveränderter Traktion.
- Verringerung der Gierbewegung im MSR-Betrieb von heckgetriebenen Fahrzeugen in der Kurve bei unveränderter Verzögerung.

Anhand des Blockschaltbildes der Fig. 5 wird die Erfindung näher erläutert. Es sollen in Fig. 5 ein ABS, eine ASR und eine MSR vorhanden sein. Es sind den vier Rädern zugeordnete Radgeschwindigkeitssensoren 1 bis 4 vorgesehen, deren Signale einer Auswerteschaltung 5 zugeführt werden. Diese erzeugt Steuersignale für die Bremsdrucksteuerventile 6 bis 9 im ABS-Fall, Steuersignale für die den angetriebenen Rädern zugeordneten Bremsdrucksteuerventile 6 und 7 sowie für ein Drucksteuerventil 10 und eventuell für ein Motorstellglied 11 im ASR-Fall und Steuersignale für das Stellglied 11 im MSR-Fall. Anhand der Fig. 5 werden lediglich die bei zu hohem Radschlupf an den angetriebenen Rädern erzeugten Schlupfsignale näher beschrieben. Aus den Radgeschwindigkeitssignalen der nicht angetriebenen Räder 3 und 4 wird in einem Block 12 eine der Fahrzeuggeschwindigkeit angenäherte Bezugsgröße V_{Ref} gebildet; diese wird mit den Signalen der Geschwindigkeitssensoren 1 und 2 in Schlupfbildnern 13 und 14 zu Schlupfsignalen verarbeitet. Vergleicher 15 und 16 geben ein Signal ab, wenn vorgegebene Schwellwerte unter- bzw. überschritten werden.

Im ABS-Fall, der von einem Block 17 bei Vorliegen von Bremsschlupf (V_{Ref} > V_{R}; Signal vom Vergleicher 19) erkannt wird, werden für die Vergleicher 15 und 16 gleiche Bremsschlupfgrenzwerte vorgegeben. Entsprechendes geschieht in den anderen Kanälen.

Im ASR-Fall, der vom Block 17 durch den Zustand Antriebsschlupf (V_{Ref} < V_{R}) und evt. keine Bremsung (kein Signal an Klemme 18) erkannt wird, werden ebenfalls gleichgroße Antriebsschlupfgrenzwerte für die Vergleicher 15 und 16 abgegeben. Gegebenenfalls kann noch das Stellglied 11 betätigt werden.

Im MSR-Fall, der vom Block 17 durch den Zustand Bremsschlupf (V_{Ref} > R_{R}) und evt. keine Bremsung erkannt wird, wird das Stellglied 11 betätigt (nicht gezeigt).

Wird nun eine Kurve durchfahren, so zeigt dies ein Sensor 20 an; ob es sich um eine Links- oder Rechtskurve handelt wird ebenfalls an den Block 17 mitgeteilt. Liegt dieses Signal vor, so werden
- im ABS-Fall entsprechend Fig. 4 die Schwellen in den Vergleichern 15 und 16 (und entsprechend in den nicht gezeigten Kanälen) und zwar abhängig davon, ob eine Links- oder Rechtskurve vorliegt und ob es sich um ein über- oder untersteuerndes Fahrzeug handelt (Heckantrieb oder Frontantrieb) unterschiedlich groß vorgegeben.
- im ASR-Fall entsprechend Fig. 2 die Schwellen in den Vergleichern 15 und 16 und zwar ebenfalls abhängig von der Kurvenrichtung (und gegebenenfalls der Fahrzeugeigenschaft) unterschiedlich groß vorgegeben.
- im MSR-Fall die Ventile 6, 7 und 10 im Sinne einer Druckeinsteuerung betätigt und die Grenzwerte der Vergleicher 15 und 16 abhängig von der Kurvenrichtung (und gegebenenfalls der Fahrzeugeigenschaft) unterschiedlich vorgegeben.

## Patentansprüche

1. Radschlupfregelsystem enthaltend Sensoren (1 bis 4) zur Ermittlung der Geschwindigkeiten von Fahrzeugrädern, eine Auswerteschaltung (5), der diese Signale zugeführt werden und die daraus in Abhängigkeit vom Bewegungsverhalten des einzelnen Rads Steuersignale erzeugt und Steuereinrichtungen (6 bis 11) zur Variation des Radschlupfes betätigt, wobei die Schlupfwerte der Räder ermittelt werden und mit Schwellwerten zur Erzeugung von Steuersignalen verglichen werden und enthaltend eine Kurvenerkennungseinrichtung (20), die bei Erkennen einer Kurve ein Signal an die Auswerteschaltung (5) gibt, dadurch gekennzeichnet, daß durch dieses Signal die Regelung auf unterschiedliche zulässige Schlupfwerte auf den beiden Wagenseiten umgeschaltet wird (durch 17) derart, daß ein dem durch die Über- oder Untersteuerungsneigung des Fahrzeugs entstehenden Giermoment entgegengesetztes Giermoment erzeugt wird.

2. Radschlupfregelsystem nach Anspruch 1, dadurch gekennzeichnet, daß es ein Antriebsschlupfregelsystem ist und daß der zulässige Schlupfwert (in 15, 16) und damit die Antriebskraft an wenigstens einem angetriebenen Rad geändert wird.

3. Radschlupfregelsystem nach Anspruch 1, dadurch gekennzeichnet, daß es ein Motorschleppmomentregelsystem ist, das den durch das Motorschleppmoment erzeugten Bremsschlupf durch Erhöhung des Motormoments (über 11) vermindert und daß durch Einsteuern von Bremsdruck an den Bremsen der angetriebenen Räder (mittels 6, 7) und Regelung auf unterschiedliche zulässige Schlupfwerte unterschiedliche Verzögerungskräfte an den Wagenseiten erzeugt werden (mittels 15, 16, 17).

4. Radschlupfregelsystem nach Anspruch 1, dadurch gekennzeichnet daß es ein Antiblockierregelsystem ist und daß der zulässige Schlupfwert und damit die Bremskraft an wenigstens einem Rad geändert wird (mittels 15, 16, 17).

## Claims

1. Wheel-slip control system containing sensors (1 to 4) for determining the speeds of vehicle wheels, and an evaluation circuit (5), to which these signals are fed and which generates control signals from them as a function of the movement behaviour of the individual wheel and actuates control devices (6 to 11) for varying the wheel slip, slip values of the wheels being determined and being compared with threshold values for the purpose of generating control signals and containing a bend-detection device (20) which transmits a signal to the evaluation circuit (5) when a bend is detected, characterized in that by means of this signal the control is switched to different permissible slip values on the two vehicle sides (by 17), in such a way as to generate a yawing moment countering the yawing moment occurring as a result of the oversteering or understeering tendency of the vehicle.

2. Wheel-slip control system according to Claim 1, characterized in that it is a drive slip control system, and in that the permissible slip value (in 15,16) and therefore the driving force at at least one driven wheel is changed.

3. Wheel-slip control system according to Claim 1, characterized in that it is an engine drag-moment control system which reduces the brake slip generated by the engine drag moment by means of an increase of the engine torque (via 11), and in that different deceleration forces are generated on the vehicle sides by feeding brake pressure to the brakes of the driven wheels (by means of 6,7) and by regulating to different permissible slip values (by means of 15,16,17).

4. Wheel-slip control system according to Claim 1, characterized in that it is an anti-lock control system, and in that the permissible slip value and therefore the brake force at at least one wheel is changed (by means of 15, 16, 17).

## Revendications

1. Système de régulation du patinage, comportant les capteurs (1-4) pour déterminer les vitesses des roues du véhicule, un circuit d'exploitation (5) qui reçoit ces signaux et en déduit les signaux de commande suivant le comportement en mouvement de chaque roue ainsi que les installations de commande (6-11) pour modifier le patinage de roue, on détermine les valeurs de patinage des roues et on les compare avec des valeurs de seuil pour créer des signaux de commande et on les fournit à une installation de reconnaissance de courbe (20) qui reconnaissant une courbe émet un signal pour le circuit d'exploitation (5), système caractérisé en ce que ce signal commute la régulation sur des valeurs de patinage différentes autorisées, des deux côtés du véhicule (par 17) de façon à créer un mouvement de giration opposé au mouvement de giration créé par la tendance au survirage ou au sous-virage du véhicule.

2. Système de régulation du patinage selon la revendication 1, caractérisé en ce que le système est un système de régulation du patinage à l'entraînement et en ce que la valeur de patinage autorisée (dans 15, 16) et la force motrice sont ainsi changées sur au moins une roue motrice.

3. Système de régulation du patinage selon la revendication 1, caractérisé en ce qu'il s'agit d'un système de régulation du couple de frein moteur diminué par le patinage au freinage créé par le couple de frein moteur, par augmentation du couple moteur (par 11) et en ce qu'en commandant la pression de frein au niveau des freins des roues motrices (par 6 et 7) et par régulation sur différentes valeurs autorisées du patinage, on crée des forces de décélération différentes sur les côtés du véhicule (à l'aide de 15, 16, 17).

4. Système de régulation du patinage selon la revendication 1, caractérisé en ce qu'il s'agit d'un système de régulation antiblocage et en ce que la valeur de patinage autorisée et ainsi la force de freinage est modifiée sur au moins une roue (par l'intermédiaire de 15, 16, 17).
